# FASCICULE DE BREVET EUROPEEN

(11) **EP 0 877 721 B1**
(45) Date de publication et mention de la délivrance du brevet: **19.04.2000**
(21) Numéro de dépôt: 97901687.0
(22) Date de dépôt: 28.01.1997
(51) Int. Cl.: C05F 3/00, C02F 9/00, C02F 1/44

(54) **PROCEDE DE TRAITEMENT DES EFFLUENTS LIQUIDES AQUEUX CONTENANT DES MATIERES ORGANIQUES ET MINERALES EN VUE DE LEUR VALORISATION**
VERFAHREN ZUR BEHANDLUNG VON ORGANISCH- UND MINERALSTOFFE ENTHALTENDEN ABWÄSSER ZUM ZWECKE SEINER WIEDERVERWENDUNG
METHOD FOR TREATING AQUEOUS LIQUID EFFLUENTS CONTAINING ORGANIC AND INORGANIC MATERIALS TO ENABLE RECYCLING THEREOF

(30) Priorité: 29.01.1996 FR 9601002
(43) Date de publication de la demande: 18.11.1998
(73) Titulaire: RHODIA CHIMIE, 92408 Courbevoie Cédex (FR)
(72) Inventeur: LAMY, Pierre-Yves, F-38370 Saint-Clair-du-Rhône (FR); COMMUNAL, Jean-Pierre, F-38550 Le Péage-de-Roussillon (FR)
(74) Mandataire: Le Guen, Gérard
(86) Numéro de dépôt international: FR9700166
(87) Numéro de publication internationale: WO9728101

(56) Documents cités:
- EP-A- 0 315 713
- EP-A- 0 396 390
- EP-A- 0 426 219
- EP-A- 0 490 859
- WO-A-95/21140

## Description

La présente invention concerne un procédé de traitement des effluents liquides aqueux contenant des matières organiques et minérales en vue de leur valorisation. Elle concerne plus spécifiquement un procédé de traitement d'effluents liquides aqueux contenant des matières organiques et minérales afin d'obtenir, d'une part, une phase liquide aqueuse épurée et, d'autre part, un amendement et/ou un engrais agricole organique solides.

Elle concerne également l'application dudit procédé au traitement des déjections animales liquides et en particulier des lisiers d'animaux, notamment du lisier de porcs.

Elle concerne aussi l'application de ce procédé au traitement d'autres effluents comme les effluents provenant des industries agro-alimentaires.

D'une manière générale, la présente invention concerne un procédé de traitement d'un effluent liquide aqueux contenant des matières organiques et minérales ayant une teneur de 1 à 12 % en poids en matières sèches.

La production importante d'effluents aqueux d'origine agricole, notamment de lisier d'animaux, pose des problèmes de plus en plus graves à l'agriculture et aussi à la protection du milieu naturel notamment de cours d'eau et des nappes phréatiques. Des règlements de plus en plus sévères sont mis en place afin d'éviter les effets très négatifs de la pollution du milieu naturel due aux divers lisiers d'animaux.

La pollution engendrée touche l'ensemble du milieu naturel:
air, eau, sol (eaux souterraines). Plus précisément, la pollution se manifeste:
- par les odeurs (matières organiques volatiles, H₂S, NH₃)
- par les rejets de nitrates (dans les eaux de surface et les eaux sous-terraines)
- par les rejets de phosphates (essentiellement dans les eaux de surface par entraînement lors de ruissellement)
- au niveau bactériologique (lors d'épandages ou de transport des lisiers).

Pour l'heure, les procédés connus d'épuration de tels effluents présentent l'inconvénient de ne pas toujours traiter le problème dans son ensemble. Par exemple, les procédés biologiques de type nitrification/dénitrification produisent une boue biologique contenant la majeure partie des phosphates, l'utilisation de cette boue ne peut se faire de manière agronomique correcte qu'en épandage sur des surfaces équivalentes à celle d'un lisier brut. Il en est de même des procédés d'extraction et de déshydratation thermique de la matière organique volatile et des composés azotés ammoniacaux. Des systèmes combinant les procédés biologiques de digestion anaérobie et de déshydratation thermique utilisant le bio-gaz donnent lieu à des unités complexes opérant à très grande échelle. Ils nécessitent alors un centre collectif de traitement et un encombrement important des routes. Par ailleurs, ils présentent un facteur de contagion d'un élevage à l'autre nécessitant un entretien sanitaire strict du moyen de transport.

La présente invention se propose de résoudre les inconvénients sus-mentionnés. Dans ce but, la présente invention vise à fournir un procédé de traitement d'effluents aqueux contenant des matières organiques et minérales qui permette de valoriser dans leur ensemble ces effluents sur les lieux mêmes de leur production ou à proximité sans aucun transfert notable de pollution.

L'invention a ainsi pour objet un procédé de traitement d'un effluent liquide aqueux contenant des matières organiques et minérales et notamment du lisier, cet effluent ayant une teneur d'au plus 12 % en poids en matières sèches, afin d'obtenir d'une part une phase liquide aqueuse épurée et, d'autre part, un amendement organique et/ou un engrais organique solides, procédé qui comprend :
- la soumission de l'effluent à une ou plusieurs étapes de séparation liquide/solideprimaire et éventuellement une ou plusieurs étapes de traitements physico-chimiques, ce en quoi on obtient d'une part un milieu liquide ne contenant pas plus de 3 % et de préférence pas plus de 1 % et notamment pas plus de 0,7 % en poids de matières sèches et ayant une turbidité d'au plus 300 NTU, de préférence d'au plus 200 NTU,en particulier d'au plus 120 NTU et, d'autre part, un ensemble de concentrats contenant au total au moins 15 % et de préférence au moins 20 % en poids de matières sèches ;
- la soumission du milieu liquide ainsi obtenu à une étape d'ultra- ou micro-filtration, ce en quoi en obtient un ultra- ou microfiltrat contenant au plus 1 % en poids de matières sèches et ayant une turbidité d'au plus 100 NTU, de préférence d'au plus 50 NTU;
- la soumission de l'ultra-ou du microfiltrat à une opération d'osmose inverse, ce en quoi on obtient un concentrat et un perméat, ce perméat constituant la phase aqueuse épurée ;
- éventuellement l'addition et le mélange avec l'ensemble des concentrats d'un complément organique sous forme particulaire, de façon à obtenir un mélange contenant de 20 à 40 % en poids de matières sèches, et
- la fermentation aérobie (ou compostage) dudit mélange jusqu'à obtenir un amendement organique et/ou un engrais organique ayant une teneur de 40 à 60 % en poids de matières sèches.

Par phase aqueuse épurée, on entend une phase aqueuse dont les teneurs en azote et en phosphore sont sensiblement réduites par rapport à celles de l'effluent de départ. Ainsi, dans le cas où les matières organiques et minérales, notamment le lisier, contenues dans cet effluent comprennent 2 à 6 kg d'azote par m³ et 3 à 6 kg de P₂O₅ par m³, la phase aqueuse épurée obtenue contient avantageusement moins de 20 %, en particulier moins de 15 % en poids de l'azote du lisier et moins de 5 %, en particulier moins de 1% en poids du phosphore dudit lisier.

Il est à noter que les taux de matières sèches indiqués correspondent aux taux de matières sèches après passage à l'étuve pendant 24 heures, c'est-à-dire aux taux de matières sèches des produits desquels ont été retirés les matières volatilisées à 105° C pendant 24 heures.

Selon l'invention, la (les) étapes (s) de séparation liquide/solide primaire peut (peuvent) comprendre au moins une étape de filtration dont le but est d'abaisser la teneur des matières sèches dans le milieu à un niveau au plus égal à 3 % en poids, avantageusement au plus égal à 1 % en poids, éventuellement après traitement ultérieur par des procédés physico-chimiques, afin de pouvoir traiter ensuite le milieu ainsi obtenu par ultra- ou microfiltration.

Cette étape de séparation liquide/solide primaire peut être réalisée à l'aide d'une filtration mécanique dont le seuil inférieur de coupure est en général compris entre 0,025 et 1 mm, préférentiellement entre 50 et 250 micromètres. Son but est d'abaisser sensiblement la teneur en matière en suspension de l'effluent. Les moyens utilisés à cette fin donneront préférentiellement un premier concentrat à siccité élevée. Cela peut être obtenu avec des équipements connus de l'homme de l'art. En particulier, une vis presseuse, une centrifugeuse ou encore préférentiellement un tambour rotatif avec extracteur en continu du concentrat. Préalablement, on peut en outre réaliser une étape de séparation liquide/solide grossière ou tamisage si l'effluent à traiter contient des particules solides de taille relativement importante qui handicaperaient l'équipement de filtration fine liquide/solide.

Le procédé selon l'invention comprend avantageusement un traitement physico-chimique de coagulation, et/ou floculation, en général à l'issue de l'étape précédente de séparation liquide/solide grossière, et/ou juste avant une étape de filtration.

Ainsi, l'effluent provenant de l'étape de séparation liquide/solide grossière peut être traité à l'aide d'au moins un agent coagulant. Tout type d'agent coagulant peut être employé.

On peut ainsi utiliser au moins un agent coagulant minéral. De manière préférée, l'agent coagulant minéral est alors un sel de fer ou d'aluminium. Ce sel de fer peut répondre à la formule (1) suivante :

Fe₂Clₓ(SO₄)_{y} (1)

dans laquelle o≤x≤6, 0≤y≤3 et x+2y=6.

De même ce sel d'aluminium peut répondre à la formule (2) suivante :

Al₂(OH)ₐCl_{b}(SO₄)_{c} (2)

dans laquelle 0≤a≤6, 0≤b≤6, 0≤c≤3 et a+b+2c=6.

L'agent coagulant minéral peut notamment être choisi dans le groupe formé par le chlorure ferreux, le chlorure ferrique, le sulfate ferreux, le sulfate ferrique, le chlorosulfate ferrique, les sulfates d'aluminium, les chlorosulfates d'aluminium basique. On peut employer un mélange d'agents coagulants minéraux. La quantité d'agent coagulant minéral employée est comprise, en général, entre 0,1 à 50 kg par m³ d'effluent, de préférence entre 1 et 15 kg/m³ d'effluent.

On peut également employer au moins un agent coagulant organique. Cet agent coagulant organique consiste habituellement en un polyélectrolyte neutre ou, de manière très préférée, cationique.

Les polyélectrolytes susceptibles d'être ainsi employés dans la présente invention sont notamment :
- les polyamines neutres et les polyamines quaternisées; plus précisément on peut citer les polyalkylamines et les polyhydroxyalkylamines, neutres ou quaternisées; conviennent particulièrement les homopolymères suivants :
   . la polyéthylèneamine, le polychlorure d'hydroxy-2-propyl-1-N-méthylammonium, le polychlorure d'hydroxy-2-propyl-1,1-N-diméthylammonium, le polyhydrogénosulfate de vinyl-2-imidazolinium, le polychlorure de diallyl-diméthyl-ammonium; on peut également citer le copolymère formé par l'acrylamide et le chlorure de diallyl-diméthylammonium;
   . les polyaminoacrylates et les polyaminométhacrylates, et plus précisément les polydialkylaminoalkylacrylates et les polydialkylaminoalkylméthacrylates; à titre d'exemple, le poly-N,N-diméthylaminoéthylméthacrylate, neutre ou quaternaire, convient bien, que ce soit sous la forme de l'homopolymère ou d'un copolymère avec l'acrylamide;
   . les polyaminoacrylamides et les polyaminométhacrylamides, et plus précisément les polydialkylaminoalkylacrylamides ou -méthacrylamides; à titre d'exemples, on peut citer les poly-N-diméthylaminopropylméthacrylamides poly-N-diméthylaminoéthylacrylamides.

On peut utiliser un mélange d'agents coagulants organiques. La quantité d'agent coagulant organique susceptible d'être employée est comprise, en général, entre 0,1 et 5 kg/m³ d'effluent.

On emploie, de préférence, au moins un agent coagulant minéral et au moins un agent coagulant organique.

L'agent coagulant ou le mélange d'agents coagulants peut être utilisé en présence d'au moins un acide de manière telle que sa mise en oeuvre s'effectue à la valeur de pH du milieu réactionnel optimale. La Demanderesse a constaté que l'adjonction d'acide permet, notamment dans le cas de lisiers d'animaux, de réduire sensiblement la quantité d'agent(s) coagulant(s).

En particulier pour les lisiers d'animaux, l'acide est préférentiellement de l'acide sulfurique, qui présente un double avantage:
- celui de modifier l'équilibre des sels d'ammonium vers le sulfate d'ammonium plus stable chimiquement et thermiquement que le carbonate d'ammonium (ou bicarbonate d'ammonium);
- l'élément sulfate est agronomiquement valorisé dans le produit final solide obtenu à partir des divers concentrats issus du traitement de l'effluent liquide.

De manière très avantageuse, on emploie un mélange formé d'au moins un agent coagulant minéral, d'au moins un agent coagulant organique (de préférence un polyélectrolyte cationique) et d'au moins un acide (de préférence de l'acide sulfurique), et éventuellement de l'eau.

L'étape de coagulation est effectuée de préférence sous agitation.

L'étape de coagulation constitue une étape de conditionnement de l'effluent à traiter. De plus, la Demanderesse a constaté que cette étape conduisait à la précipitation des composés à base de phosphate et ceux à base de phosphore et généralement de composés protéiques, et, également, à une diminution de la DBO (demande biologique en oxygène) et de la DCO (demande chimique en oxygène).

Le procédé de l'invention peut avantageusement comprendre après l'étape de coagulation une étape de floculation, de préférence à l'aide d'au moins un polyélectyrolyte anionique.

De manière préférée (mais non limitative), le polyélectrolyte de type anionique susceptible d'être employé est un polyacrylamide anionique, un polyacrylate, un polyméthacrylate, un polycarboxylate, un polysaccharide (par exemple la gomme xanthane, la gomme guar, l'alginate) ou le chitosan.

On peut employer un mélange de polyélectrolytes du type anionique.

La quantité de polyélectrolytes employée dans cette étape est comprise, en général, entre 1 et 100 grammes, de préférence entre 2 et 30 grammes, exprimée en poids de polyélectrolyte sec, par m³ de déchets organiques (présents dans le milieu initial à traiter).

L'effluent issu de l'étape de floculation est généralement soumis à une opération de séparation liquide/solide (filtration en particulier) qui enlève les matières en suspension floculées.

L'opération d'ultrafiltration ou de microfiltration utilisée dans la présente invention est une technique connue qui fait partie des techniques séparatives à membranes dont la force motrice du transfert est un gradient de pression.

Elle est ici effectuée au moyen de tout dispositif d'ultrafiltration ou de microfiltration adéquat.

L'ultrafiltration ou la microfiltration utilisée dans la présente invention peut être frontale ou, de préférence tangentielle. Dans ce dernier cas, le principe de fonctionnement consiste en général à faire circuler sous pression l'effluent à traiter le long d'une membrane perméable au solvant mais imperméable aux solutés que l'on souhaite retenir.

La membrane employée pour effectuer l'opération d'ultrafiltration dans le procédé selon l'invention peut être organique ou inorganique.

Elle peut être homogène, asymétrique ou composite. Une membrane est dite asymétrique lorsque la couche permsélective ne représente qu'une très fine épaisseur de la membrane; par opposition, la membrane homogène constitue dans son ensemble la couche permsélective; un cas particulier de membrane asymétrique est la membrane composite obtenue en déposant la couche permsélective sur un support préexistant.

La configuration de la membrane employée est par exemple multicanale, tubulaire, spiralée ou plane.

Son seuil de coupure est généralement compris entre 0,001 et 0,5 µm.

On peut employer comme membrane dans le cadre de l'invention notamment une membrane minérale en zircone déposée sur un support en alumine, en acier inoxydable ou en carbone (par exemple de seuil de coupure 0,14 µm).

On peut également employer une membrane organique à base de polysulfone, de polyvinylidène fluoré ou de préférence à base de copolymères d'acrylonitrile (par exemple de seuil de coupure 40 kD).

On peut aussi utiliser une membrane minérale sur support monolithe telle que décrite dans la demande de brevet européen EP-A-0 585 152.

A l'issue de l'opération d'ultra- ou microfiltration on obtient un rétentat (ou concentrat) et un ultra- ou microfiltrat (ou perméat).

Le rétentat (ou concentrat) obtenu à l'issue de l'étape d'ultrafiltration ou de microfiltration peut être recyclé vers l'étape ou les étapes de séparation liquide/solide.

L'obtention d'un milieu contenant de préférence pas plus de 1 % en poids de matières sèches et ayant une turbidité de préférence d'au plus 200 NTU, préalablement à l'étape d'ultra- ou de micro-filtration, présente l'intérêt majeur d'opérer dans cette étape à un facteur de concentration volumique élevé, c'est-à-dire à un rapport (en volume) effluent entrant/concentrat élevé. Ainsi, le débit de retentat (ou concentrat) issu de l'étape d'ultra- ou microfiltration qui est avantageusement recyclé vers l'étape ou les étapes de séparation liquide/solide est faible en rapport au débit d'effluent entrant. Il est constaté sur un effluent de lisier de porc que le débit de concentrat recyclé peut représenter 1/5 du débit entrant dès lors que l'étape d'ultra ou microfiltration est alimentée à au plus 1 % en poids de matières sèches et à une turbidité d'au plus 200 NTU.

L'effluent issu de l'étape d'ultra- ou microfiltration est ensuite soumis à une opération d'osmose inverse.

On obtient alors un second rétentat (ou concentrat) et un second filtrat (ou perméat).

L'opération d'osmose inverse est une technique bien connue de l'homme de métier et fait partie des techniques séparatives à membranes dont la force motrice du transfert est un gradient de pression.

L'osmose inverse employée dans la présente invention est de préférence tangentielle. Le principe de fonctionnement consiste à faire circuler l'effluent à traiter à une pression supérieure à sa pression osmotique le long d'une membrane perméable à l'eau mais imperméable aux solutés, matières organiques en solution et aux sels.

L'efficacité de la séparation peut être alors ajustée par le choix des membranes, des pressions et du pH afin de produire un perméat final de qualité adaptée à son utilisation postérieure au traitement.

La configuration de la membrane peut être tubulaire, discoïde (en forme de disque), plane et de préférence spiralée.

La membrane employée pour effectuer l'opération d'osmose inverse dans le procédé selon l'invention est de préférence organique, elle peut être supportée par un matériau organique ou inorganique. Elle est généralement de type acétate de cellulose et préférentiellement un mélange polysulfone-polyamide.

Le filtrat issu de l'étape d'osmose inverse est un liquide incolore, inodore et dont la teneur en DBO/DCO éléments pathogènes et sels dissous, en particulier ammonium, potassium et phosphates permet notamment le rejet en milieu naturel tel que cours d'eau ou irrigation suivant les contraintes ou normes applicables localement.

Le rétentat (concentrat) issu de l'étape d'osmose inverse contient les fractions légères de la matière organique dissoute de l'effluent traité et les sels dissous.

Les concentrats des étapes de séparation liquide/solide et physico-chimique et de l'étape d'osmose inverse peuvent être réunis en vue de leur transformation en amendement organique et/ou engrais organique par fermentation aérobie (ou compostage).

Le procédé selon l'invention ne comprend pas, d'une manière générale, d'étape de traitement à l'aide d'un agent oxydant avant l'étape d'ultra- ou de micro-filtration, comme décrit dans FR 94 01 093.

Toutefois, il peut comprendre une telle étape notamment juste avant l'étape d'ultra- ou de micro-filtration.

L'agent oxydant utilisé est alors en général choisi dans le groupe formé par l'oxygène, les dérivés oxygénés, notamment les peroxydes (par exemple l'eau oxygénée, l'ozone), le chlore, les dérivés chlorés (par exemple le dioxyde de chlore, l'hypochlorite de sodium, l'hypochlorite de calcium, l'hypochlorite de potassium, le chlorite de sodium, le chlorate de sodium, l'eau de javel), le permanganate de potassium.

On peut employer un mélange d'agents oxydants.

On utilisera avantageusement l'eau de javel comme agent oxydant; la quantité d'eau de javel alors employée est alors généralement comprise entre 0,1 et 5 litres, de préférence entre 0,5 et 1 litre, par m³ de déchets organiques (présents dans le milieu initial à traiter).

Selon un mode de réalisation préférée le procédé de l'invention comprend successivement les étapes suivantes :
(A) la soumission de l'effluent liquide aqueux contenant des matières organiques et minérales à au moins une étape de séparation liquide-solide primaire, ce en quoi on obtient un premier concentrat et un filtrat,
(B) le traitement du filtrat issu de l'étape (A) à l'aide d'au moins un agent coagulant, éventuellement en présence d'au moins un acide,
(C) le traitement de l'effluent obtenu à l'issue de l'étape (B) à l'aide d'au moins un agent floculant, de préférence au moins un polyélectrolyte anionique,
(D) la soumission de l'effluent obtenu à l'issue de l'étape (C) à au moins une étape de séparation liquide/solide primaire, ce en quoi on obtient un deuxième concentrat et un filtrat,
(E) la soumission du filtrat obtenu à l'issue de l'étape (D) à une ultra ou microfiltration sur membrane, ce en quoi on obtient un rétentat et un filtrat, le rétentat étant de préférence recyclé vers (en amont de) l'étape (B),
(F) la soumission du filtrat issu de l'étape (E) à une opération d'osmose inverse, afin d'obtenir un perméat qui constitue la phase aqueuse épurée et un concentrat (rétentat),
(G) le mélange du concentrat issu de l'étape (A), du concentrat issu de l'étape (D) et du concentrat issu de l'étape (F),
(H) éventuellement l'addition, au mélange issu de l'étape (G), d'un complément organique sous forme particulaire, de façon à obtenir un mélange contenant de 20 à 40 % en poids de matières sèches, et
(I) la fermentation aérobie (ou compostage) du mélange issu de l'étape (G) ou (H) jusqu'à obtenir un amendement organique et/ou un engrais organique ayant une teneur de 40 à 60 % en poids de matières sèches.

Dans ce mode de réalisation préféré, les moyens de séparation liquide/solide de la première étape (A) comprennent avantageusement une centrifugeuse, un décanteur, une vis presseuse ou encore et préférentiellement, un tambour rotatif avec extracteur en continu du gâteau. Pour la vis presseuse ou le tambour rotatif, les grilles auront une dimension de passage comprise entre 25 µm et 1 mm, préférentiellement entre 50 et 200 µm.

Les moyens de séparation liquide/solide de l'étape (D) après coagulation/floculation comprennent avantageusement un tambour filtrant, un tapis d'égouttage avec ou sans rouleaux de pressage, un décanteur si la densité des flocs produits le justifie ou encore un flottateur si la densité des flocs produits le justifie, une centrifugeuse ou encore un filtre presse.

De préférence, une combinaison de deux de ces moyens sont mis en oeuvre dans l'étape (D). La première séparation liquide/solide de l'étape (D) fournit un concentrat à moyenne siccité (c'est-à-dire contenant au moins 4 % en poids de matières sèches) ; la seconde séparation liquide/solide de l'étape (D) traite ce concentrat afin d'obtenir un concentrat à haute siccité (c'est-à-dire contenant au moins 15 % et de préférence au moins 20 % en poids de matières sèches). Le concentrat à moyenne siccité est avantageusement conditionné avant son traitement dans la deuxième séparation liquide/solide, de préférence par un conditionnement chimique.

Un tel conditionnement chimique avec au moins un agent coagulant minéral, de préférence de formule 1 ou 2 définie précédemment, plutôt qu'un polyelectrolyte cationique présente l'avantage d'un apport supplémentaire en sulfate. De plus il permet de limiter l'ajout d'eau dans le système qu'apporterait obligatoirement les doses élevées de produit organique en solution à 0,5 % à 1 %. Par ailleurs, le coagulant minéral permet de limiter la DCO de l'eau filtrée. Le conditionnement avec un agent coagulant minéral de type sel de fer ou d'aluminium est d'un grand intérêt par rapport au calcium souvent utilisé dans les boues urbaines. En effet, ceci permet de limiter le pouvoir colmatant de l'effluent vis-à-vis des membranes. II est ainsi possible d'obtenir des turbidités, au plus égales à 200 NTU similaires à celles obtenues à la première étape de coagulation. Un conditionnement chimique avec un agent coagulant minéral de la série précitée, combiné à une déshydratation sur table à rouleaux ou filtre presse peut permettre d'atteindre une siccité supérieure à 25 % en poids de matières sèches.

Le filtrat obtenu à l'issue de l'étape (D) contient au plus 3 %, de préférence au plus 1 % et notamment au plus 0,7 % en poids de matières sèches et présente une turbidité d'au plus 300 NTU, de préférence d'au plus 200 NTU, en particulier d'au plus 120 NTU.

L'ensemble formé par le concentrat Ra de l'étape (A), le concentrat Rd de l'étape (D) et le concentrat (rétentat) Rf de l'étape (F) contiennent la très grande majorité des matières organiques et minérales en suspension et dissoutes de l'effluent traité y compris les composés N, P, Mg, Fe, Cu, Zn des lisiers d'animaux.

Selon l'invention, l'ensemble des résidus solides Ra, Rd et Rf est utilisé pour l'élaboration d'un amendement et/ou engrais agricole organique par compostage (ou stabilisation biologique). Ce compostage consiste en une fermentation aérobie des matières organiques rapidement fermentiscibles.

Cette fermentation aérobie se produit généralement comme suit.

L'ensemble des déjections animales est naturellement ensemencé en micro-organismes de fermentation aérobie qui, dans les conditions d'humidité et de température appropriées, se développent rapidement. Dans une première phase à basse température, les micro-organismes mésophiles ont une activité prédominante par rapport aux micro-organismes thermophiles. L'activité croissant, la température au sein de la matière augmente et, dans une deuxième phase, l'activité thermophile devient prépondérante et fait atteindre une température (55/65° C) au coeur du volume de la matière, qui est la température optimale de fermentation. Cette température s'auto-régule. L'activité des micro-organismes aérobies nécessite un apport d'oxygène par l'aération soit naturelle, soit activée par aspiration ou insufflation d'air à travers la matière. Le bilan thermique de cette activité est positif; le solde contribue à sécher par évaporation la matière en cours de traitement. La gestion de ce procédé repose donc sur le contrôle du taux d'humidité et l'aération de la biomasse. Dans la pratique, la transformation de l'ensemble de la matière peut être obtenue par retournement et mélange de celle-ci dès que la température à coeur atteint le palier de 55/65° C.

Le déclenchement de la fermentation aérobie se fait en général lorsque la matière présente un taux d'humidité compris entre 60 et 80 % (soit 20 à 40 % en poids de matières sèches).

Les concentrats obtenus avec le procédé de la présente invention ont avantageusement les teneurs pondérales suivantes en matière sèche :
Ra > 25%
Rd > 15 %
Rf > 2 %.

Les conditions de démarrage de fermentation aérobie sont obtenues si nécessaire par complémentation avec une matière organique à siccité élevée, c'est-à-dire supérieure à celle du mélange des résidus.

Pour cette complémentation, on utilise préférentiellement un coproduit agricole ou silvicole tel que paille hachée, écorce (broyée ou non), sciure ou encore une matière organique fossile telle que la tourbe. Cette matière présente une granulométrie et une composition qui procurent au mélange une bonne homogénéisation de l'humidité par absorption de l'eau du concentrat et une aération suffisante pour étant disposée en tas assurer l'apport d'oxygène de la biomasse.

Pour un lisier brut ayant de 1,5 à 5 % en poids de matières sèches, la Demanderesse a constaté que le mélange de ces trois concentrats présente une teneur en matières sèches d'au moins 15 % et notamment d'au moins 20 % en poids.

La complémentation, par exemple avec 15 % en poids de sciure de bois à 90 % de matières sèches et tamisée à 3 mm procure un mélange de bonne coulabilité et à structure aérée, ce qui est recherché pour l'étape de fermentation aérobie; le mélange pourrait alors contenir environ 30 % en poids de matières sèches.

En général, la stabilisation de manière homogène de l'ensemble de la biomasse est obtenue dans un premier temps par deux ou trois retournements et mélange espacés d'environ une à deux semaines où les matières facilement fermentiscibles sont consommées et dans un deuxième temps par maturation qui poursuit la fermentation qui s'opère plus lentement et nécessite un ou deux retournements complémentaires. Une stabilisation adéquate peut être obtenue par une aération naturelle sur une période totale de 4 à 16 semaines suivant la matière de complémentation utilisée. L'amendement obtenu est alors stocké et prêt à être utilisé, avec ou sans conditionnement préalable, avec les moyens classiques.

Le procédé selon l'invention sera mieux compris grâce à la description détaillée qui suit, pour laquelle on se réfèrera aux figures annexées, sur lesquelles :
- la figure 1 représente un schéma général de la première partie du procédé selon l'invention,
- la figure 2 représente le schéma général d'un mode de réalisation d'une partie d'une installation pour la mise en oeuvre du procédé de traitement selon l'invention,
- la figure 3 représente le schéma général d'un mode de réalisation d'une deuxième partie d'une installation pour la mise en oeuvre du procédé de traitement selon l'invention.

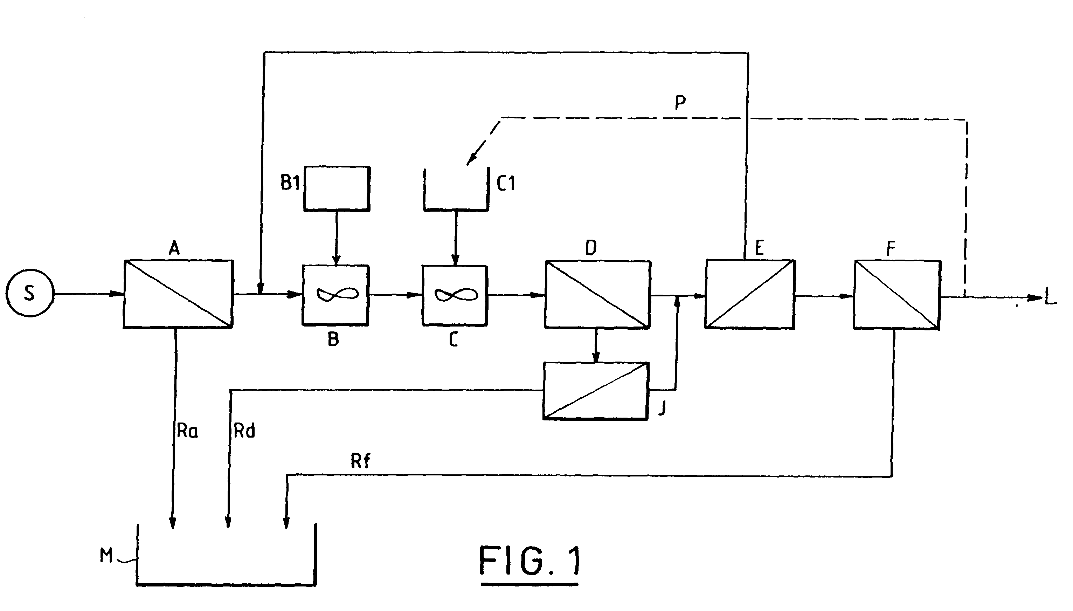

Comme représenté sur la figure 1, l'effluent liquide aqueux contenant des matières organiques et minérales, tel qu'un lisier, provenant d'un réservoir de stockage S, est tout d'abord soumis à une étape A de séparation liquide/solide primaire qui fournit d'une part un filtrat et d'autre part un concentrat Ra.

Le concentrat Ra est envoyé vers une zone de mélange M de matières solides, tandis que le filtrat est envoyé vers une zone B de coagulation dans laquelle est introduite, éventuellement après mélange avec un acide, une solution d'un ou plusieurs agents coagulants provenant d'un réservoir B1.

L'effluent sortant de la zone B est ensuite traité dans une zone C par une solution d'agent floculant provenant d'un réservoir C1. Cette solution peut être préalablement mélangée avec une partie P de l'effluent liquide épuré L.

L'effluent sortant de la zone C est envoyé à une zone D de filtration qui fournit d'une part un filtrat qui est envoyé vers une zone d'ultra-ou microfiltration E et, d'autre part, un concentrat qui est envoyé vers une zone de déshydratation J pour fournir un concentrat déshydraté Rd qui est envoyé vers la zone de mélange M, tandis que l'effluent liquide de la zone de déshydratation est renvoyé vers la zone E.

L'ultrafiltration ou la microfiltration dans la zone E fournit un filtrat qui est envoyé à une zone F de traitement par osmose inverse tandis que le rétentat de la zone E est recyclé en amont de la zone B.

La zone F fournit d'une part un perméat qui constitue un effluent épuré dont une partie P peut être recyclée, comme vu précédemment, tandis que le concentrat Rf est envoyé à la zone de mélange M.

On décrira maintenant de façon plus détaillée une installation pour la mise en oeuvre du procédé.

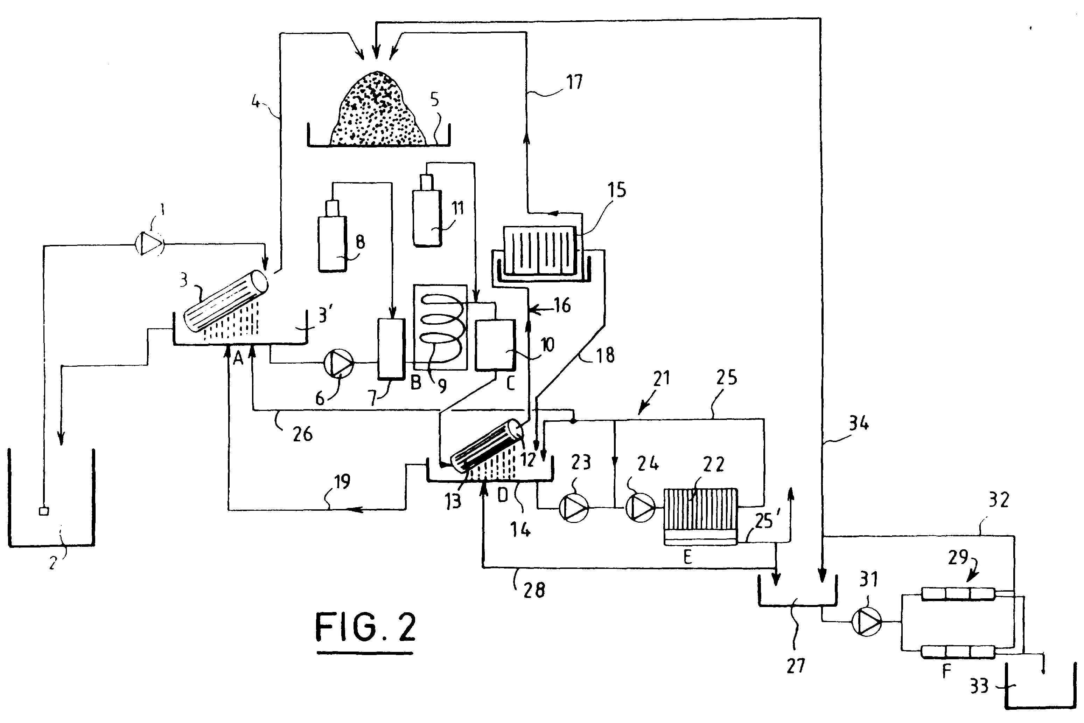

Comme représenté sur la figure 2, le milieu à épurer est pompé par une pompe 1 depuis la fosse 2 jusqu'à un tambour rotatif 3.

Ce tambour rotatif comporte une enveloppe composée d'une succession de lamelles de section triangulaire dont le sommet est dirigé vers l'extérieur en acier inoxydable. Elles ménagent entre elles un intervalle de passage compris entre 50 et 150 µm. A l'intérieur du tambour un système d'extraction permet l'extraction en continu du concentrat soumis par la rotation à un fort égouttage procuré par une accélération d'environ 25 g (250 m/s²).

Le tambour rotatif peut être aussi remplacé par une vis de pressage avec une grille de passage comprise entre 50 et 200 µm. Préférentiellement, il sera opté pour le tambour qui procure une meilleure siccité du concentrat contenant de 25 à 35 % de matières sèches et un taux de capture de 30 à 60 % de matières en suspension du lisier entrant.

L'étape (A) de séparation liquide/solide est effectuée en continu. La capacité de traitement de l'étape (A) est ajustée à la capacité des étapes ultérieures. L'ajustement est opéré d'abord par le réglage du débit de la pompe 1, puis, si nécessaire, à l'aide de la capacité de stockage du bac 3' muni d'un indicateur du niveau qui assure si besoin l'arrêt momentané de l'étape (A) (pompe 1 et système d'entraînement du tambour) et d'un trop plein de sécurité connecté à la fosse 2.

La fosse 2 peut, si besoin est, être munie d'un système de brassage discontinu qui procure l'homogénéisation de l'effluent.

Les solides séparés dans l'étape (A) sont convoyés par un dispositif automatique constitué d'un tapis 4 vers une aire de stockage 5 ou tombent par gravité sur l'aire de stockage 5 suivant la disposition des équipements. S'il y a égouttage, le retour des liquides est fait vers l'étape (A).

L'effluent obtenu à l'issue de l'étape (A) est ensuite pompé par l'intermédiaire de la pompe 6 vers un coagulateur 7.

L'agent coagulant est injecté dans le coagulateur 7, à partir d'un réservoir 8 de stockage, l'agent coagulant ayant été ou non acidifié à l'aide d'acide sulfurique.

Le coagulateur 7 est en général constitué d'un réacteur assurant un mélange intime entre l'effluent et l'agent coagulant. Ledit réacteur peut être alors muni de pales axiales permettant d'assurer une vitesse de rotation périphérique comprise entre 0,5 et 7 ms⁻¹, avantageusement entre 0,8 et 5 ms⁻¹ ou consister en un mélangeur statique; le coagulateur 7 peut être prolongé d'un tube en serpentin 9 permettant un temps de contact du milieu avec l'agent coagulant compris entre 10 sec. et 15 min., avantageusement entre 30 sec. et 2 min.

Après l'étape (B), le milieu à traiter est acheminé vers l'étape (C) de floculation.

L'appareil 10 utilisé pour la floculation est identique au coagulateur 7 de l'étape (B) à l'exception près, lorsqu'on utilise des éléments mobiles pour le mélange, que la vitesse de rotation des pales est plus faible et se situe dans l'intervalle de 0,4 à 3 ms⁻¹, avantageusement de 0,7 à 1,5 ms⁻¹ .

En amont du floculateur 10 est injecté l'agent floculant à partir d'un réservoir 11 de stockage.

Si des éléments mobiles sont employés pour le mélange, l'entraînement des axes du coagulateur 7 et du floculateur 10 peut être avantageusement assuré par le même moteur.

A l'étape (D), l'effluent obtenu à l'issue de l'étape (C) subit une opération de séparation liquide/solide.

Le dispositif de séparation liquide/solide 12 utilisé à cette fin est constitué d'un tambour rotatif (à support filtrant 13), d'un décanteur si la densité des flocs le justifie (> 1) ou encore d'un flottateur ou hydrocyclone si densité < 1. Dans le cas d'un lisier d'animaux, le dispositif est avantageusement choisi parmi les dispositifs tel que flottateur ou hydrocyclone. Le filtrat est récupéré dans une cuve 14.

Avec un flottateur statique, le concentrat atteint une siccité d'au moins 4 % et généralement d'au moins 6 % de matières sèches et le filtrat a de préférence une teneur en matières sèches d'au plus 1 % en poids.

Le concentrat (ou boue) est convoyé par tapis, goulotte ou pompage vers le déshydrateur 15 après avoir été éventuellement conditionné, de préférence avec un agent coagulant minéral 16. Le dispositif de déshydratation utilisé à cette fin est en général constitué d'une centrifugeuse, d'une bande presseuse, ou d'un filtre presse ou d'un tapis d'égouttage à rouleaux.

Il a été réalisé des essais de conditionnement chimique par coagulation qui mettent en évidence un accroissement élevé de la déshydratation par rapport à la déshydratation obtenue sans un tel conditionnement.

La quantité d'agent coagulant minéral utilisé pour le conditionnement chimique dépend de la teneur en matières sèches du concentrat. Ainsi, plus la teneur en matières sèches du concentrat est élevée, plus la quantité d'agent coagulant est élevée. Par exemple, pour des teneurs en matières sèches de 10 % en poids on utilise avantageusement 45 kg de solution commerciale de coagulant du type sel de fer ou d'aluminium par tonne de concentrat à conditionner et pour des teneurs en matières sèches de 6,6 % en poids, on utilise avantageusement 30 kg de solution commerciale de coagulant du type sel de fer ou d'aluminium par tonne de concentrat à conditionner.

Ces essais attestent de la réduction de la résistance à la déshydratation à la filtration procuré par le conditionnement chimique. De telles valeurs obtenues sur test de filtrabilité capillaire [CST(1)] permettent suivant l'état de l'art des filtres presses de conduire à une siccité du gâteau de filtration avec filtre presse d'au moins 25 % en poids.

Le concentrat du déshydrateur est convoyé par goulotte ou tapis 17 ou encore par gravité sur l'aire 5 rejoignant le concentrat de l'étape A.

L'effluent liquide du déshydrateur 15 est renvoyé par un conduit 18 dans la cuve 14 comportant un trop plein 19 qui retourne dans le bac 3'. L'effluent de la cuve 14 est acheminé vers l'étape (E) où il est soumis à une ultrafiltration.

De préférence, l'ultrafiltration est tangentielle et réalisée de façon connue en soi sur un dispositif d'ultrafiltration 21 comportant un module d'ultrafiltration 22 équipé d'une membrane organique en copolymères d'acrylonitrile ayant un seuil de coupure de 40 kD, ainsi que de manière connue une pompe d'alimentation 23 et une pompe de recirculation 24 ainsi qu'une boucle de recirculation 25.

Le rétentat obtenu à l'issue de l'étape (E) est recyclé par une conduite 26 vers le bac 3'.

L'effluent issu de l'étape d'ultrafiltration (E) peut être utilisé en agriculture ou rejeté dans un réseau de collecte d'eau usée ou recueilli dans une cuve 27 à partir de laquelle il est acheminé vers l'étape (F) où il est soumis à une osmose inverse.

Si besoin est, jusqu'à ce que le module d'ultrafiltration 21 atteigne un palier de fonctionnement optimal, l'effluent (perméat) 25' est recyclé vers la cuve 14 par une conduite 28.

Le dispositif d'osmose inverse 29 utilisé selon l'invention comporte de façon connue une membrane d'osmose inverse de type connu, de forme spiralée constituée d'un mélange polysulfone-polyamide déposée sur un support organique, ainsi qu'une pompe d'alimentation 31 et une boucle de recirculation 32.

L'osmose inverse est de préférence de type tangentiel. Le perméat obtenu à l'issue de cette étape est stocké dans une cuve 33 et son utilisation dépend des conditions d'exploitation et des contraintes locales. Sans agents pathogènes, incolore et sans odeur, il peut être utilisé comme eau technique. Dans l'exploitation sur une porcherie, il pourra pour partie être recyclé dans le lavage des locaux et fosses sous caillebotis pour partie utilisé en irrigation et/ou si les conditions locales le permettent, rejeté en milieu naturel.

Le rétentat 34 obtenu au cours de cette opération d'osmose inverse peut être convoyé vers l'aire de stockage 5 ou vers un bac de stockage séparé.

Le procédé selon l'invention est un procédé qui, de l'étape (A) à l'étape (F), peut être effectué en continu.

Il peut être utilisé directement sur le site producteur des effluents et s'adapte à tous les types de débit sans obligation de collecte préalable.

En variante, l'osmose inverse peut être réalisée de façon discontinue à partir de deux cuves telles que 27 qui sont alimentées successivement.

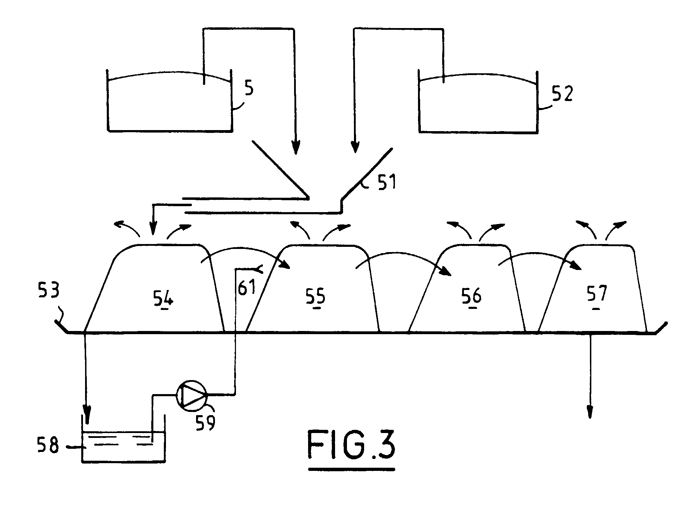

La transformation des concentrats provenant des étapes séparation concentration (A) à (F) et stockés sur l'aire de stockage 5 est illustrée sur la figure 3.

Cette phase, à l'inverse de la première, est discontinue.

L'ensemble des concentrats des étapes (A), (D) et (F) sont rassemblés sur la zone de stockage 5. Cet ensemble est convoyé vers un mélangeur 51. En parallèle des matières complémentaires constitués par un complément organique sous forme particulaire (tel que sciure de bois, écorce broyée, paille hachée ou tourbe) stockées sur une aire 52 sont envoyées vers le mélangeur 51. Le mélange dont on a ajusté la siccité en réglant le pourcentage de complément organique ajouté est mis sur une aire 53 sous forme d'andain 54.

Pour faciliter la compréhension, il est ici décrit une technique de traitement par andain. Dans ce cas, la matière avance physiquement dans l'aire de transformation. Bien entendu, il peut être employé un traitement dans lequel la matière reste sur place tout au long de la transformation, avec des cycles de mélange/retournement comme indiqués ci-après pour les andains.

La température à coeur de l'andain doit atteindre de préférence 55/65° C. Il est mélangé par retournement pour constituer l'andain 55, l'andain précédent ayant été retourné pour constituer l'andain 56. De même, l'andain précédemment à la place de l'andain 56 est retourné sous forme d'andain 57 pour achever sa maturation.

Les jus d'égoutfage (s'il y en a) et les eaux de ruissellement de pluie sur l'aire 53 (si elle est non couverte) sont recueillis dans une fosse 58. Lorsque celle-ci est pleine, une pompe 59 la vide en déversant par un système d'aspersion 61 les jus sur les andains 55, 56.

A l'issue de la stabilisation, l'ensemble du concentrat et du complément organique est transformé en un amendement organique ou un engrais organique (suivant la teneur en N, P et K du mélange de concentrats) et le degré d'humidité final obtenu.

L'amendement peut être complémenté en éléments minéraux afin d'obtenir la composition souhaitée en minéral.

Ainsi, à l'issue du traitement global du procédé, l'effluent est transformé en une phase aqueuse épurée et en un produit agricole dont l'utilisation est parfaitement maitrisée et qui permet d'amender les sols cultivés dans un respect total de l'environnement.

Suivant les volumes des effluents à traiter :
- les étapes (A) à (F) peuvent être effectuées à la source sans nécessité de transport collectif lourd ou en regroupant plusieurs sources d'effluents très proches de l'installation de traitement;
- l'étape (I) (fermentation aérobie) peut être effectuée sur le même lieu ou sur une plateforme collectant des concentrats issus de concentrateurs voisins.

Le procédé selon l'invention peut être utilisé pour épurer les milieux (ou effluents) contenant des déjections organiques, notamment des lisiers d'animaux, en particulier du type bovin, avicole, ovin ou porcin. Il est par exemple avantageusement employé pour le traitement du lisier de porc, et ce directement sur le lieu de l'exploitation agricole concernée.

Le procédé selon l'invention peut aussi s'appliquer au traitement des effluents provenant d'industries agro-alimentaires.

Les avantages du procédé selon l'invention sont notamment:
- le procédé selon l'invention est un procédé physique dont la mise en route est immédiate et permettant à l'inverse des procédés biologiques des arrêts de son fonctionnement lorsque cela est souhaitable;
- le procédé de l'invention peut être adapté à toutes les capacités de milieu à traiter (d'une centaine de litres/jour à plusieurs dizaines de m³/jour);
- il met en oeuvre des techniques à membrane permettant une épuration totale et une gestion locale aisée du liquide épuré;
- il n'est pas sensible à la présence d'agents bactéricides dans l'effluent à l'inverse d'autres procédés tels que les bioprocédés;
- il n'est pas sensible aux variations climatiques à l'inverse d'autres procédés tels les bioprocédés;
- l'enchaînement des étapes successives permet un fonctionnement optimisé, autorisant des flux élevés sur les membranes et un espacement important des phases de lavage.

On donnera ci-après un exemple de mise en oeuvre du procédé selon l'invention à l'aide d'une installation du type représenté sur les figures 2 et 3.

### EXEMPLE 1

On traite un lisier de porc ayant les caractéristiques suivantes :

| | |
|---|---|
| DCO | 21000 ppm |
| NTK (azote total) | 1960 ppm |
| N NH₄ (azote sous forme NH₄) | 1400 ppm |
| PO₄ | 2630 ppm |
| Extrait sec (105° C) (en poids) | 1,88 %. |

### Traitement de la phase liquide

Du lisier de porc (introduit à raison de 1230 kg/h) subit une séparation liquide/solide en l'étape (A) à l'aide d'un tambour rotatif avec une accélération de 25 g avec extraction de concentrat en continu équipé d'une grille de 50 micromètres. Le concentrat (10 kg/h) a un extrait sec (105° C) de 26 %. Le filtrat (1220 kg/h) obtenu a les caractéristiques suivantes :

| | |
|---|---|
| Extrait sec à 105° C | 1,60 % en poids |
| DCO | 18000 ppm |
| NTK (azote total) | 1710 ppm |
| N NH₄ | 1400 ppm |
| PO₄ | 2410 ppm. |

Le filtrat de l'étape (A) est soumis à une coagulation (étape (B)) sous agitation à l'aide d'une solution d'agents coagulants introduite à raison de 6 l/h.

La solution d'agents coagulants comprend :
Polychlorure de diallyl-diméthyl-ammonium à 50% de matières sèches (10 % vol.)
Sulfate d'alumine à 8,2 % d'Al₂O₃ (37,5 % vol.)
Acide sulfurique à 96 % (10 % vol.)
Eau (q.s.p.)

L'effluent ainsi coagulé est floculé en l'étape (C) par introduction, à raison de 15 l/h, d'une solution de floculant de type copolymère d'acrylamide et acrylate de sodium dosé à 1,2 g de matière active par litre d'eau.

En l'étape (D), la première séparation liquide/solide à l'aide d'un flottateur produit un filtrat (1064 kg/h) ayant les caractéristiques suivantes :

| | |
|---|---|
| ES 105° C | 0,54 % |
| DCO | 1200 ppm |
| NTK | 1260 ppm |
| N NH₄ | 1160 ppm |
| Turbidite instantanée | 20 NTU |
| PO₄ | 190 ppm. |

Les boues séparées à l'aide du flottateur (156 kg/h) présentent un extrait sec (105° C) de 5,24 %. Après stockage sur une aire drainée pendant 24 heures, la siccité atteint 11,5%; les boues sont alors mélangées avec un polymère cationique de haut poids moléculaire à raison de 1 kg/t de boue à 10 % d'extrait sec. Après filtration sous vide, on obtient un concentrat ayant un extrait sec (105° C) de 21,5 %.

L'ensemble des filtrats de l'étape (D) est ensuite soumis à une ultrafiltration (étape (E)) à l'aide de membranes organiques en copolymères d'acrylonitrile ayant un seuil de coupure de 40 Kd, pour donner un ultrafiltrat ayant un extrait sec (105° C) de 0,4 % et une turbidité instantanée de 15 NTU.

L'ultrafiltrat est ensuite traité par osmose inverse avec un facteur de concentration d'environ 10 (étape (F)).

On obtient alors un concentrat (112 kg/h) ayant un extrait sec de 5,2 % et un perméat (922 kg/h) ayant les caractéristiques suivantes:

| | |
|---|---|
| DCO | 400 ppm |
| NTK | 146 ppm |
| N NH₄ | 124 ppm |
| PO₄ | < 10 ppm |
| Turbidité | < 1 NTU. |

Ce perméat (phase aqueuse épurée) peut être utilisé comme eau technique dans le cadre d'activités agricoles ou d'élevage.

L'ensemble des concentrats des étapes (A), (D) et (F) ayant respectivement des extraits secs de 26, 21,5 et 5,2 % sont réunis pour former une masse (160 kg/h) ayant un extrait sec d'environ 10,5 %.

A ces 160 kg de concentrat on ajoute 60 kg d'un complément organique à 70 % en poids d'extrait sec constitué de paille hachée ou d'écorce.

On forme un mélange (220 kg) contenant environ 27 % en poids d'extrait sec.

Par fermentation aérobie, on obtient un amendement organique à 45 % en poids de matières sèches, contenant la quasi totalité de l'azote et du phosphore présents initialement dans le lisier brut.

## Revendications

1. Procédé de traitement d'un effluent liquide aqueux contenant des matières organiques et minérales et notamment du lisier, cet effluent ayant une teneur d'au plus 12 % en poids en matières sèches, afin d'obtenir d'une part une phase liquide aqueuse épurée et, d'autre part, un amendement organique et/ou un engrais organique solides, procédé qui comprend :
- la soumission de l'effluent à une ou plusieurs étapes de séparation liquide/solide primaire et éventuellement une ou plusieurs étapes de traitements physico-chimiques, ce en quoi on obtient d'une part un milieu liquide ne contenant pas plus de 3 % en poids de matières sèches et ayant une turbidité d'au plus 300 NTU et, d'autre part, un ensemble de concentrats contenant au total au moins 15 % en poids de matières sèches ;
- la soumission du milieu liquide ainsi obtenu à une étape d'ultra- ou micro-filtration, ce en quoi on obtient un ultra- ou microfiltrat contenant au plus 1 % en poids de matières sèches et ayant une turbidité d'au plus 100 NTU;
- la soumission de l'ultra-ou du microfiltrat à une opération d'osmose inverse, ce en quoi on obtient un concentrat et un perméat, ce perméat constituant la phase aqueuse épurée ;
- éventuellement, l'addition et le mélange avec l'ensemble des concentrats d'un complément organique sous forme particulaire, de façon à obtenir un mélange contenant de 20 à 40 % en poids de matières sèches, et
- la fermentation aérobie dudit mélange jusqu'à obtenir un amendement organique et/ou un engrais organique ayant une teneur de 40 à 60 % en poids de matières sèches.

2. Procédé selon la revendication 1, dans lequel le rétentat de l'étape d'ultra- ou de microfiltration est recyclé vers l'étape ou les étapes de séparation liquide/solide.

3. Procédé selon la revendication 1, qui comprend successivement les étapes suivantes :
(A) la soumission de l'effluent liquide aqueux contenant des matières organiques et minérales à au moins une étape de séparation liquide-solide primaire, ce en quoi on obtient un premier concentrat et un filtrat,
(B) le traitement du filtrat issu de l'étape (A) à l'aide d'au moins un agent coagulant,
(C) le traitement de l'effluent obtenu à l'issue de l'étape (B) à l'aide d'au moins un agent floculant, de préférence au moins un polyélectrolyte anionique,
(D) la soumission de l'effluent obtenu à l'issue de l'étape (C) à au moins une étape de séparation liquide/solide primaire, ce en quoi on obtient un deuxième concentrat et un filtrat,
(E) la soumission du filtrat obtenu à l'issue de l'étape (D) à une ultra ou microfiltration sur membrane, ce en quoi on obtient un rétentat et un filtrat,
(F) la soumission du filtrat issu de l'étape (E) à une opération d'osmose inverse, afin d'obtenir un perméat qui constitue la phase aqueuse épurée et un concentrat (rétentat),
(G) le mélange du concentrat issu de l'étape (A), du concentrat issu de l'étape (D) et du concentrat de l'étape (F),
(H) éventuellement l'addition, au mélange issu de l'étape (G), d'un complément organique sous forme particulaire, de façon à obtenir un mélange contenant de 20 à 40 % en poids de matières sèches, et
(I) la fermentation aérobie du mélange issu de l'étape (G) ou (H) jusqu'à obtenir un amendement organique et/ou un engrais organique ayant une teneur de 40 à 60% en poids de matières sèches.

4. Procédé selon la revendication 3, dans lequel l'étape (B) est effectuée, éventuellement en présence d'au moins un acide, à l'aide d'au moins un agent coagulant minéral ou d'au moins un agent coagulant organique.

5. Procédé selon la revendication 3, dans lequel l'étape (B) est effectuée à l'aide d'un mélange formé d'au moins un agent coagulant minéral, d'au moins un agent coagulant organique et d'au moins un acide.

6. Procédé selon l'une des revendications 4 et 5, dans lequel ledit agent coagulant organique est un polyélectrolyte cationique.

7. Procédé selon l'une des revendications 3 à 6, dans lequel le rétentat obtenu à l'issue de l'ultra- ou microfiltration est recyclé vers l'étape (B).

8. Procédé selon l'une des revendications 3 à 7, dans lequel l'étape (D) comprend une première séparation liquide/solide fournissant un concentrat à moyenne siccité contenant au moins 4 % en poids de matières sèches et une deuxième séparation liquide/solide qui traite ce concentrat afin d'obtenir un concentrat contenant au moins 15 % en poids de matières sèches.

9. Procédé selon la revendication 8, comprenant un conditionnement du concentrat obtenu par la première séparation liquide/solide avant son traitement dans la deuxième séparation liquide/solide.

10. Procédé selon la revendication 9, dans lequel ledit conditionnement est un conditionnement chimique, de préférence par au moins un agent coagulant minéral.

## Claims

1. Procedure to treat an aqueous liquid effluent containing organic and mineral materials and in particular liquid manure, this effluent having a contents of at most 12% weight in dry matter, in order to obtain on one hand a purified aqueous liquid phase and, on the other hand, an organic improvement and/or an organic manure which are solid, a procedure which comprises:
• subjecting the effluent to one or several primary solid/liquid separation stages and possibly one or several physico-chemical treatment stages from which on one hand a liquid environment is obtained containing no more than 3% weight of dry matter and with a turbidity at most 300 NTU and, on the other hand, an assembly of concentrates containing in total at least 15% weight of dry matter:
• subjecting the liquid environment thus obtained to an ultra- or micro filtration stage, from which an ultra- or micro-filtrate is obtained containing at most 1% weight of dry matter and with a turbidity at most 100 NTU;
• subjecting the ultra- or micro-filtrate to an inverse osmosis operation from which a concentrate and a permeate are obtained, this permeate forming the purified aqueous phase;
• possibly, adding and mixing with all the concentrates an organic complement in a particle form in order to obtain a mix containing 20 to 40% weight of dry matter and
• aerobic fermentation of the said mix until an organic improvement and/or organic manure is obtained with a content of 40 to 60% weight of dry matter.

2. Procedure according to claim 1 in which the remainder from the ultra- or microfiltration stage is recycled to the liquid/solid separation stage or stages.

3. Procedure according to claim 1 which comprises successively the following stages;
A. subjecting the aqueous liquid effluent containing organic and mineral matter to at least one primary liquid-solid separation stage, from which an initial concentrate and a filtrate is obtained,
B. treating the filtrate resulting from stage A using at least one coagulant agent,
C. treating the effluent obtained as a result of stage B using at least one flocculate agent preferably at least one anionic polyelectrolyte,
D. subjecting the effluent obtained as a result of stage C to at least one primary solid/liquid separation stage from which a second concentrate and filtrate are obtained,
E. subjecting the filtrate obtained as a result of stage D to an ultra- or microfiltration on a membrane from which a retentate and filtrate are obtained,
F. subjecting the filtrate resulting from stage E to an inverse osmosis operation in order to obtain a permeate which forms the purified aqueous phase and a concentrate (retentate),
G. mixing the concentrate resulting from stage A, the concentrate resulting from stage D and the concentrate from stage F
H. possibly adding to the mix resulting from stage G an organic complement in a particle form in order to obtain a mix containing 20 to 40% weight dry matter and
I. aerobically fermenting the mix resulting from stage G or H in order to obtain an order improvement and/or an organic manure with a content of 40 to 60% weight dry matter.

4. Procedure according to claim 3 in which stage B is carried out, possibly in the presence of at least one acid, using at least one mineral coagulant agent or at least one organic coagulant agent.

5. Procedure according to claim 3 in which stage B is carried out using a mix formed from at least one mineral coagulant agent, at least one organic coagulant agent and at least one acid.

6. Procedure according to one of claims 4 and 5 in which the said organic coagulant agent is a cationic polyelectrolyte.

7. Procedure according to one of claims 3 to 6 in which the retentate obtained as a result from ultra- or micro filtration is recycled to stages B.

8. Procedure according to one of claims 3 to 7 in which stage D comprises an initial solid/liquid separation providing a concentrate with average dryness containing at least 4% weight dry matter and a second solid/liquid separation which treats this concentrate in order to obtain a concentrate containing at least 15% weight dry matter.

9. Procedure according to claim 8 comprising packing of the concentrate obtained by the first solid/liquid separation before its treatment in the second solid/liquid separation.

10. Procedure according to claim 9 in which the said packing is a chemical packing preferably with at least one mineral coagulant agent.

## Patentansprüche

1. Verfahren zur Behandlung eines flüssigen, wäßrigen Abstroms, der organische und anorganische Materialien und insbesondere Jauche enthält, welcher Abstrom einen Trockensubstanzgehalt von mehr als 12 Gew.-% aufweist, zur Gewinnung einer gereinigten flüssigen, wäßrigen Phase einerseits und eines festen organischen Bodenverbesserungsmittels und/oder organischen Düngemittels andererseits, welches Verfahren darin besteht:
- Unterwerfen des Abstroms einer oder mehreren primären Flüssigkeits/Feststoff-Trennstufen und gegebenenfalls einer oder mehreren Stufen physikalischchemischer Behandlungen, so daß man einerseits ein flüssiges Medium, welches einen Trockensubstanzgehalt von nicht mehr als 3 Gew.-% und eine Trübung von höchstens 300 NTU aufweist, und andererseits eine Reihe von Konzentraten, die einen Trockensubstanzgehalt von mindestens 15 Gew.-% aufweisen, erhält;
- Unterwerfen des in dieser Weise erhaltenen flüssigen Mediums einer Stufe der Ultra- oder Mikrofiltration, so daß man ein Ultra- oder Mikrofiltrat erhält, welches einen Trockensubstanzgehalt von höchstens 1 Gew. -% und eine Trübung von höchstens 100 NTU aufweist;
- Unterwerfen des Ultra- oder Mikrofiltrats einer Behandlung durch inverse Osmose, so daß man ein Konzentrat und ein Permeat erhält, welches Permeat die gereinigte wäßrige Phase darstellt;
- gegebenenfalls Zugabe eines teilchenförmigen organischen Ergänzungsmittels zu der Gesamtheit der Konzentrate und Vermischen zur Bildung einer Mischung, die einen Trockensubstanzgehalt von 20 bis 40 Gew.-% aufweist; und
- aerobe Fermentation der Mischung unter Erhalt eines organischen Bodenverbesserungsmittels und/oder organischen Düngemittels mit einem Trockensubstanzgehalt von 40 bis 60 Gew.-%.

2. Verfahren nach Anspruch 1, worin das Retentat der Ultra- oder Mikrofiltrationsstufe zu der oder den Stufen der Flüssigkeits/Feststoff-Trennung zurückgeführt wird.

3. Verfahren nach Anspruch 1, welches nacheinander die folgenden Stufen umfaßt:
(A) Unterwerfen des flüssigen, wäßrigen Abstroms, der die organischen und anorganischen Materialien enthält, mindestens einer primären Stufe der Flüssigkeits/Feststoff-Trennung, so daß man ein erstes Konzentrat und ein Filtrat erhält,
(B) Behandlung des am Ende der Stufe (A) erhaltenen Filtrats mit mindestens einem Koagulierungsmittel,
(C) Behandlung des am Ende der Stufe (B) erhaltenen Abstroms mit mindestens einem Ausflockungsmittel, vorzugsweise mindestens einem anionischen Polyelektrolyten,
(D) Unterwerfen des am Ende der Stufe (C) erhaltenen Abstroms mindestens einer Stufe der primären Flüssigkeits/Feststoff-Trennung, so daß man ein zweites Konzentrat und ein Filtrat erhält,
(E) Unterwerfen des am Ende der Stufe (D) erhaltenen Filtrats einer Ultra- oder Mikrofiltration über einer Membran, so daß man ein Retentat und ein Filtrat erhält,
(F) Unterwerfen des am Ende der Stufe (E) erhaltenen Filtrats einer inversen Osmose unter Erhalt eines Permeats, welches die gereinigte wäßrige Phase darstellt, und eines Konzentrats (Retentats),
(G) Vermischen des am Ende der Stufe (A) erhaltenen Konzentrats mit dem am Ende der Stufe (D) erhaltenen Konzentrats und dem Konzentrat der Stufe (F),
(H) eventuelle Zugabe eines organischen Ergänzungsmittels in Teilchenform zu der am Ende der Stufe (G) erhaltenen Mischung, so daß man eine Mischung erhält, die einen Trockensubstanzgehalt von 20 bis 40 Gew.-% aufweist, und
(I) aerobe Fermentation der am Ende der Stufe (G) oder (H) erhaltenen Mischung zur Bildung eines organischen Bodenbehandlungsmittels und/oder organischen Düngemittels mit einem Trockensubstanzgehalt von 40 bis 60 Gew.-%.

4. Verfahren nach Anspruch 3, worin die Stufe (B) gegebenenfalls in Gegenwart mindestens einer Säure, mit Hilfe mindestens eines anorganischen Koagulierungsmittels oder mindestens eines organischen Koagulierungsmittels durchgeführt wird.

5. Verfahren nach Anspruch 3, worin die Stufe (B) mit Hilfe einer Mischung durchgeführt wird, die aus mindestens einem anorganischen Koagulierungsmittel, mindestens einem organischen Koagulierungsmittel und mindestens einer Säure gebildet ist.

6. Verfahren nach einem der Ansprüche 4 und 5, worin das organische Koagulierungsmittel ein kationischer Polyelektrolyt ist.

7. Verfahren nach einem der Ansprüche 3 bis 6, worin das am Ende der Ultra- oder Mikrofiltration erhaltene Retentat zu der Stufe (B) zurückgeführt wird.

8. Verfahren nach einem der Ansprüche 3 bis 7, worin die Stufe (D) eine erste Flüssigkeits /Feststoff-Trennung umfaßt, welche ein Konzentrat mit einer mittleren Feuchtigkeit liefert, das einen Trockensubstanzgehalt von mindestens 4 Gew.-% aufweist, und eine zweite Flüssigkeits / Feststoff-Trennung umfaßt, in der das Konzentrat behandelt wird zur Bildung eines Konzentrats mit einem Trockensubstanzgehalt von mindestens 15 Gew.-%.

9. Verfahren nach Anspruch 8, umfassend die Konditionierung des in der ersten Flüssigkeits/Feststoff-Trennung erhaltenen Konzentrats vor seiner Behandlung in der zweiten Flüssigkeits/Feststoff-Trennung.

10. Verfahren nach Anspruch 9, worin die Konditionierung eine chemische Konditionierung, vorzugsweise mit Hilfe eines anorganischen Koagulierungsmittels, ist.
